# EUROPEAN PATENT APPLICATION

(11) **EP 4 738 800 A1**
(43) Date of publication of application: **06.05.2026**
(21) Application number: 24887952.0
(22) Date of filing: 05.11.2024
(51) Int. Cl.: H04M 1/02

(54) **ELECTRONIC DEVICE**

(30) Priority: 07.11.2023 CN 202311475202
(71) Applicant: Huawei Technologies Co., Ltd., Shenzhen, Guangdong 518129 (CN)
(72) Inventor: YU, Junfeng, Shenzhen, Guangdong 518129 (CN); ZHANG, Baochao, Shenzhen, Guangdong 518129 (CN); ZHANG, Xing, Shenzhen, Guangdong 518129 (CN); WANG, Tao, Shenzhen, Guangdong 518129 (CN)
(74) Representative: Maiwald GmbH
(86) International application number: PCT/CN2024/129985
(87) International publication number: WO 2025/098340

(57) **Abstract**

This application provides an electronic device. The electronic device includes a housing, a camera module, a first circuit board, and an electrical connection structure. The electrical connection structure includes a metal spring and a screw. A first part of the metal spring is electrically connected to the camera module, and a second part of the metal spring is at least partially fastened to a first circuit board by using the screw. The camera module is electrically connected to a ground terminal of the electronic device by using the metal spring, the screw, and the first circuit board. Alternatively, the electrical connection structure includes a shielding cover, an insulation part, and a first conductive sheet. The shielding cover is electrically connected to the first circuit board, and the insulation part is fastened to the shielding cover. A first part of the first conductive sheet is electrically connected to the camera module, and a second part of the first conductive sheet is at least partially fastened to a side that is of the insulation part and that is away from the shielding cover. The first conductive sheet, the insulation part, and the shielding cover form a capacitor. In this way, reliability of electrical connection for grounding of a coupling current on the camera module is improved.

## Description

This application claims priority to Chinese Patent Application No. 202311475202.7, filed with the China National Intellectual Property Administration on November 7, 2023, and entitled "ELECTRONIC DEVICE", which is incorporated herein by reference in its entirety.

### TECHNICAL FIELD

This application relates to the field of terminal device technologies, and in particular, to an electronic device.

### BACKGROUND

To improve a screen-to-body ratio of an electronic device and overall aesthetics of a screen of a mobile phone, a front camera module is disposed as close as possible to a housing, and a distance between the front camera module and an antenna built in the housing becomes increasingly small. As a result, a current coupled from the antenna to the front camera module is increasingly large. To avoid that the coupling current affects operating of the camera module, a conductive fabric is disposed to transfer the coupling current on the front camera module to a grounding structure, so that the coupling current on the front camera module is directly grounded.

However, reliability of electrical connection between the conductive fabric and the grounding structure through conductive adhesive is poor. As a result, the coupling current on the camera module cannot be smoothly grounded, and affects operating of the camera module. In addition, at a position at which the electrical connection between the conductive fabric and the grounding structure has poor reliability, the coupling current is likely to be radiated into air, generating a radiated spurious emission (radiated spurious emission, RSE) current, and affecting a wireless communication signal.

### SUMMARY

This application provides an electronic device. The electronic device includes a housing, a camera module, a first circuit board, and an electrical connection structure. The camera module and the first circuit board are disposed in the housing, and the electrical connection structure is electrically connected to the camera module. The first circuit board is electrically connected to a ground terminal of the electronic device.

The electrical connection structure includes a metal spring and a screw. A first part of the metal spring is electrically connected to the camera module, and a second part of the metal spring is at least partially fastened to a first circuit board by using the screw. The camera module is electrically connected to the ground terminal of the electronic device by using the metal spring, the screw, and the first circuit board. Alternatively, the electrical connection structure includes a shielding cover, an insulation part, and a first conductive sheet. The shielding cover is electrically connected to the first circuit board, and the insulation part is fastened to the shielding cover. A first part of the first conductive sheet is electrically connected to the camera module, and a second part of the first conductive sheet is at least partially fastened to a side that is of the insulation part and that is away from the shielding cover. The first conductive sheet, the insulation part, and the shielding cover form a capacitor.

It may be understood that, when the electrical connection structure includes the metal spring and the screw, the metal spring is fastened to the first circuit board by using the screw, and connection strength between the metal spring and the first circuit board is high, thereby reducing a risk that the metal spring falls off from the first circuit board due to impact from external force, and providing good reliability of electrical connection between the metal spring and the first circuit board. A coupling current on the camera module may be well grounded, to reduce a risk of a fault caused by the coupling current on the camera module, and further avoid that the coupling current is radiated into air during transmission due to an unstable electrical connection caused by poor connection reliability between the metal spring and the first circuit board, generating a radiated spurious emission (radiated spurious emission, RSE) current and affecting wireless communication quality.

When the electrical connection structure includes the shielding cover, the insulation part, and the first conductive sheet, a coupling current on the camera module is coupled to the ground through the capacitor, in comparison with a solution in which the first conductive sheet is directly electrically connected to the shielding cover through conductive adhesive and the coupling current on the camera module is directly grounded, where the conductive adhesive is made of an insulating material mixed with metal particles, and the metal particles are used for conducting electricity. The metal particles are easily oxidized when exposed to air. Moreover, the metal particles generate heat during electrical transmission, and the heat further accelerates the oxidation of metal particles. After the metal particles are oxidized, a resistivity of the conductive adhesive is high, and a bonding capability of the conductive adhesive is reduced. Consequently, reliability of electrical connection between the first conductive sheet and the shielding cover is reduced. In the technical solutions of this application, the insulation part is not prone to aging, reliability of electrical connection between the first conductive sheet and the shielding cover is good, and the coupling current on the camera module may be well grounded. This reduces a risk of a fault caused by the coupling current on the camera module, and further avoids that the coupling current is radiated into air during transmission due to an unstable electrical connection, generating an RSE current and affecting wireless communication quality.

In a possible implementation, the insulation part is an insulation adhesive.

It may be understood that the insulation part may be used not only as an insulation medium of a capacitor, but also as a connection structure between the first conductive sheet and the shielding cover, so that a connection structure does not need to be additionally disposed. This is conducive to miniaturization of the electronic device.

In a possible implementation, a direct-facing area between the insulation part and the shielding cover is greater than 20 square millimeters.

It may be understood that the direct-facing area between the insulation part and the shielding cover is a projection area of the insulation part onto the shielding cover along a first direction. The first direction is a direction in which the second part 432 of the first conductive sheet faces the shielding cover. In this way, when the first conductive sheet is fastened to the shielding cover by using the insulation part, a connection area between the first conductive sheet and the shielding cover is large, connection reliability between the first conductive sheet and the shielding cover is good, and the coupling current on the camera module may be well grounded.

In a possible implementation, a thickness of the insulation part ranges from 0.03 millimeter to 0.05 millimeter. In this way, a risk that the insulation part is broken down when the coupling current is large can be reduced.

In a possible implementation, a thickness of the first conductive sheet ranges from 0.03 millimeter to 0.05 millimeter. In this way, a thickness of the electronic device in a Z-axis direction may be thin, which is conducive to lightness and thinning of the electronic device.

In a possible implementation, the first conductive sheet is a nickel-plated conductive fabric, a gold-plated conductive fabric, a carbon-plated conductive fabric, or an aluminum foil fiber composite fabric. Alternatively, the first conductive sheet is copper foil.

It may be understood that the conductive fabric or the copper foil is thin in thickness and light in quality, and occupies small internal space of the electronic device. The thickness of the electronic device in the Z-axis direction may be thin, which is conducive to lightness and thinning of the electronic device. In addition, a shape of the conductive fabric or the copper foil with specific flexibility is easy to cut, and may be better attached to the camera module, so that there is a large contact area between the first conductive sheet and the camera module, connection reliability is good, and impedance in a conductive process is low.

In a possible implementation, the metal spring is a nickel-plated stainless steel sheet or a gold-plated stainless steel sheet. In this way, strength of the metal spring is high, and a risk of the metal spring falling off from the first circuit board is low.

In a possible implementation, a thickness of the metal spring ranges from 0.2 millimeter to 0.3 millimeter.

In a possible implementation, the second part of the metal spring is provided with a first through hole, the first circuit board is provided with a second through hole, the screw is fastened in the first through hole and the second through hole, and the metal spring abuts against a ground terminal of the first circuit board. In this way, connection reliability between the metal spring and the first circuit board is good. The coupling current on the camera module may be reliably transmitted to the ground terminal of the first circuit board through both the metal spring and the screw.

In a possible implementation, the electrical connection structure further includes a second conductive sheet. A part of the second conductive sheet is electrically connected to the camera module, the other part of the second conductive sheet is electrically connected to the metal spring, and the camera module is electrically connected to the metal spring by using the second conductive sheet.

It may be understood that, the second conductive sheet is disposed, so that an electrical connection area between the metal spring and the camera module may be increased, and reliability of electrical connection between the metal spring and the camera module is improved.

In a possible implementation, the camera module includes a lens assembly, a casing, and a second circuit board. The casing is fastened to the second circuit board, the casing and the second circuit board enclose accommodation space, and the lens assembly is disposed in the accommodation space.

The first part of the first conductive sheet is electrically connected to the second circuit board. Alternatively, the first part of the metal spring is electrically connected to the second circuit board.

It may be understood that, in comparison with a solution in which the first part of the first conductive sheet is fastened to the casing of the camera module, the first part of the first conductive sheet is fastened to a side that is of the second circuit board and that is away from the casing, and there are fewer structures around the second circuit board, which facilitates connection and assembly between the first conductive sheet and the camera module.

Similarly, in comparison with a solution in which the first part of the metal spring is fastened to the casing of the camera module, the first part of the metal spring is fastened to the side that is of the second circuit board and that is away from the casing, and there are fewer structures around the second circuit board, which facilitates connection and assembly between the metal spring and the camera module.

### BRIEF DESCRIPTION OF DRAWINGS

To describe the technical solutions in embodiments of this application, the following describes the accompanying drawings used in embodiments of this application.
FIG. 1 is a diagram of a structure of an electronic device in an implementation according to an embodiment of this application;
FIG. 2 is an exploded view of the electronic device shown in FIG. 1 in an implementation;
FIG. 3 is a partial sectional view of the electronic device shown in FIG. 1 along a section line A-A in an implementation;
FIG. 4 is an exploded view of a camera module shown in FIG. 2 in an implementation;
FIG. 5 is a sectional view of the camera module shown in FIG. 4 along a section line B-B in an implementation;
FIG. 6 is an assembly diagram of a partial structure shown in FIG. 3 from another perspective;
FIG. 7 is an enlarged view of a structure shown in FIG. 3 at C in an implementation;
FIG. 8 is an enlarged view of a structure shown in FIG. 5 at D in an implementation;
FIG. 9a is a partial sectional view of the electronic device shown in FIG. 1 along the section line A-A in another implementation;
FIG. 9b is a partial sectional view of the electronic device shown in FIG. 1 along the section line A-A in still another implementation;
FIG. 10 is an assembly diagram of a partial structure shown in FIG. 9b from another perspective; and
FIG. 11 is a structure diagram of a structure shown in FIG. 9b at E in an implementation.

### DESCRIPTION OF EMBODIMENTS

In the descriptions of embodiments of this application, it should be noted that the term "connection" should be understood in a broad sense, unless otherwise specified or limited expressly. For example, the "connection" may be a detachable connection or a non-detachable connection, or may be a direct connection or an indirect connection through an intermediate medium. "Fastened" means that two parts are connected to each other and a relative position relationship remains unchanged after the two parts are connected to each other. Orientation terms mentioned in embodiments of this application, for example, "top" and "bottom", are merely directions with reference to the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application. The following terms such as "first" and "second" are used merely for description, and shall not be understood as implying or implying relative importance or implicitly indicating a quantity of indicated technical features. Therefore, a feature limited by "first" or "second" may explicitly or implicitly include one or more of such features. In addition, "a plurality of" means "at least two".

The following describes embodiments of this application with reference to the accompanying drawings in embodiments of this application.

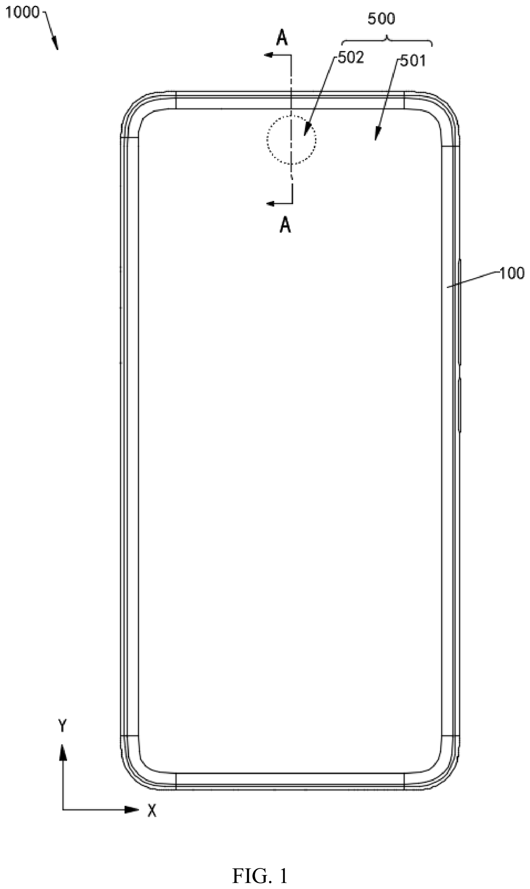

FIG. 1 is a diagram of a structure of an electronic device 1000 in an implementation according to an embodiment of this application.

The electronic device 1000 may include but is not limited to an electronic device 1000 with a camera shooting function, such as a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, a virtual reality (virtual reality, VR) glasses, a VR helmet, or an uncrewed aerial vehicle. A mobile phone is used as an example of the electronic device 1000 shown in FIG. 1 for description.

It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. For ease of description, a width direction of the electronic device 1000 is defined as an X-axis. A length direction of the electronic device 1000 is a Y-axis. A thickness direction of the electronic device 1000 is a Z-axis. It may be understood that a coordinate system of the electronic device 1000 may be flexibly set based on a specific actual requirement.

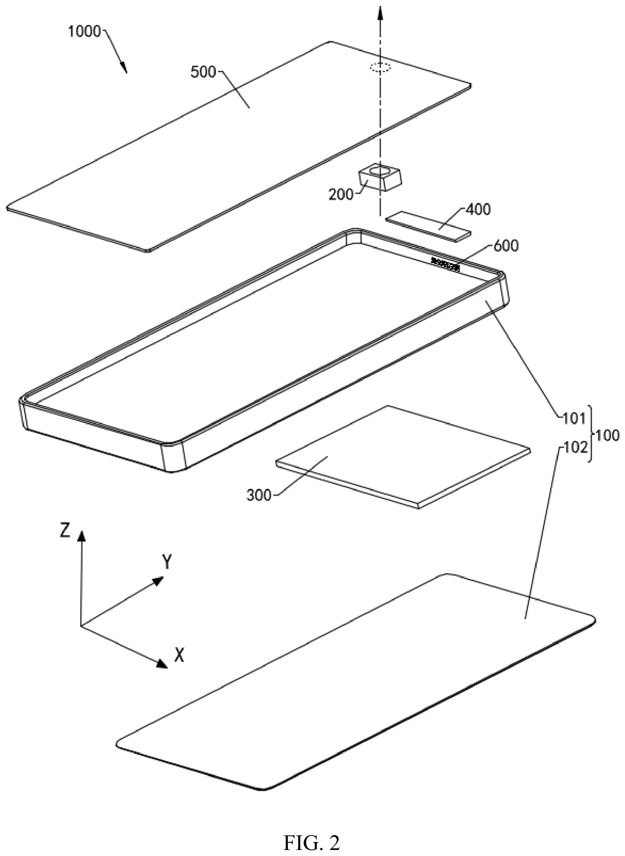

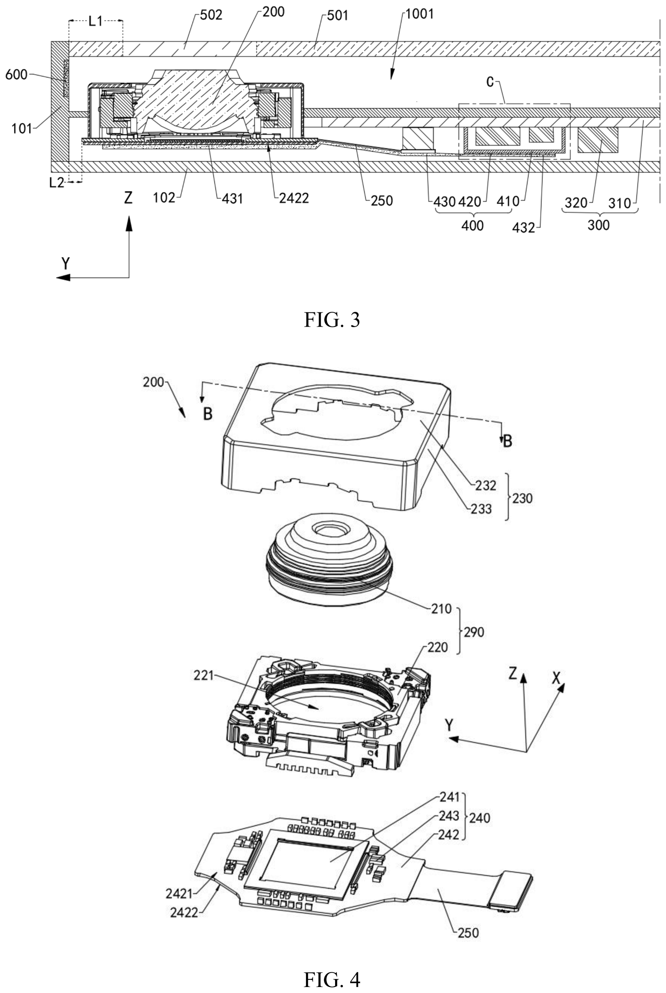

FIG. 2 is an exploded view of the electronic device 1000 shown in FIG. 1 in an implementation. FIG. 3 is a partial sectional view of the electronic device 1000 shown in FIG. 1 along a section line A-A in an implementation.

As shown in FIG. 2 and FIG. 3, the electronic device 1000 may include a housing 100, a camera module 200, a main board 300, an electrical connection structure 400, a screen 500, and an antenna 600. The screen 500 and the antenna 600 are installed in the housing 100. The screen 500 and the housing 100 enclose internal space 1001 of the electronic device 1000. The camera module 200, the electrical connection structure 400, and the main board 300 are all installed in the internal space 1001 of the electronic device 1000.

The screen 500 may be configured to display an image, a video, and the like. In some implementations, the screen 500 may further have a touch sensing function, and the touch sensing function of the screen 500 is used to sense a touch action of a user, so as to implement human-machine interaction. For example, the screen 500 may be a liquid crystal display (liquid crystal display, LCD), an organic light-emitting diode (organic light-emitting diode, OLED) display, an active-matrix organic light-emitting diode or active matrix organic light-emitting diode (active-matrix organic light-emitting diode, AMOLED) display, a flexible light-emitting diode (flex light-emitting diode, FLED) display, a mini-LED display, a micro-LED display, a micro-OLED display, a quantum dot light-emitting diode (quantum dot light-emitting diode, QLED) display, or the like.

In some implementations, when the electronic device 1000 is a device in another form, the electronic device 1000 may not include the screen 500.

For example, the housing 100 may include a middle frame 101 and a rear cover 102. The rear cover 102 is fastened to the middle frame 101. For example, the rear cover 102 may be fastened to the middle frame 101 through adhesive. The screen 500 may be located on a side that is of the middle frame 101 and that is away from the rear cover 102. In this case, the screen 500 and the rear cover 102 are respectively located on two sides of the middle frame 101. The screen 500, the middle frame 101, and the rear cover 102 jointly enclose the internal space of the electronic device 1000.

In some implementations, the rear cover 102 and the middle frame 101 may be connected in a connection manner such as bonding, welding, snap-fit connection, or screw connection. In some implementations, the rear cover 102 and the middle frame 101 may alternatively be of an integrally formed structure, that is, the rear cover 102 and the middle frame 101 are of an integral structure.

The camera module 200 may be a front-facing camera module, or may be a rear-facing camera module. In this application, an example in which the camera module 200 is a front-facing camera module is used for description. A light collection surface of the camera module 200 faces the screen 500. For example, the screen 500 may include a display area 501 and a light-transmitting area 502. The display area 501 is configured to display an image. The light-transmitting area 502 is configured to allow light outside the electronic device 1000 to enter the electronic device 1000 through the light-transmitting area. The camera module 200 and the light-transmitting area 502 may be disposed opposite to each other. The camera module 200 may collect ambient light that enters the electronic device 1000. The light-transmitting area is not limited to a circle shown in FIG. 1.

For example, the camera module 200 may be a common camera module (that is, an optical axis direction of the camera module 200 is the thickness direction of the electronic device 1000, that is, a Z-axis direction). In some implementations, the camera module 200 may alternatively be a periscope camera module (that is, an optical axis direction of the camera module 200 is any direction on an X-Y plane). In the accompanying drawings of this application, an example in which the camera module 200 is a common camera module is used for description.

In some implementations, when the camera module 200 is the front-facing camera module 200, the camera module 200 may be disposed on the top of the electronic device 1000. The top of the electronic device 1000 is an end that is of the electronic device 1000 and that is away from the ground when the user uses the electronic device 1000. Similarly, the light-transmitting area 502 of the screen 500 may also be disposed on the top of the screen 500. For example, a distance L1 between the light-transmitting area 502 and the housing 100 may range from 0 mm to 0.2 mm. A distance L2 between the camera module 200 and the housing 100 is less than L1. It may be understood that the light-transmitting area 502 is disposed as close as possible to the housing 100. In this way, the screen 500 may have a larger area for displaying an image, and the user has a better experience of using the electronic device.

For example, the main board 300 may include a first circuit board 310 and a first electronic element 320. The first electronic element 320 may be fastened to the first circuit board 310. The first circuit board 310 may be used as a bearing structure of the first electronic element 320. The first circuit board 310 may be fastened to the middle frame 101. In some implementations, the first circuit board 310 may alternatively be fastened to the rear cover 102 of a casing 230.

For example, the first electronic element 320 may be an active component such as a chip, or may be a passive component such as a capacitor, an inductor, or a resistor. It may be understood that a quantity and types of first electronic elements 320 and an arrangement manner of the first electronic elements 320 on the circuit board may be selected by a person skilled in the art, to form, together with a circuit board, the main board 300 with a specific function.

The antenna 600 may be configured to transmit and/or receive an electromagnetic wave to implement a radiation function. In some implementations, the electronic device 1000 may further include a communication module. The communication module may integrate one or more first electronic elements 320 of at least one communication processing module. The communication module may be configured to perform processing such as frequency modulation, amplification, and filtering on a radiation signal of the antenna 600. For example, the communication module may be disposed on the main board 300.

In some implementations, the antenna 600 may be fastened to the housing 100. For example, the antenna 600 may be built in the middle frame 101, or pasted on an inner surface of the middle frame 101. The inner surface of the middle frame 101 faces the inside of the electronic device 1000. In some implementations, the antenna 600 may alternatively be built in the rear cover 102.

In some implementations, the antenna 600 may be disposed on the top of the housing 100. The top of the housing 100 is an end that is of the housing 100 and that is away from the ground when the user uses the electronic device 1000. It may be understood that there are fewer electronic components near the top of the housing 100, and the radiation function of the antenna 600 is less interfered.

The electrical connection structure 400 may be electrically connected to the camera module 200. The electrical connection structure 400 may be electrically connected to the first circuit board 310. The camera module 200 may be electrically connected to the first circuit board 310 by using the electrical connection structure 400. When the first circuit board 310 is electrically connected to a ground terminal of the electronic device 1000, the camera module 200 may be electrically connected to the ground terminal of the electronic device 1000 by using the electrical connection structure 400. The electrical connection structure 400 may be configured to reliably ground an interference current on the camera module 200.

For example, the camera module 200 may include some metal mechanical parts. When the camera module 200 is close to the antenna 600, the metal mechanical part on the camera module 200 may be coupled to an operating current of the antenna 600, to generate a current (a current generated due to coupling between the metal mechanical part on the camera module 200 and the antenna 600 is referred to as a coupling current below). The coupling current on the camera module 200 may be transferred to the ground terminal of the main board 300 by using the electrical connection structure 400. The electrical connection structure 400 disposed, so that the coupling current can be prevented from interfering with operating of the camera module 200, and further, the coupling current on the camera module 200 can be prevented from interfering with transmission and/or reception of an electromagnetic wave by the antenna 600.

In some implementations, the middle frame 101 may be used as the ground terminal of the electronic device 1000, and the first circuit board 310 may be electrically connected to the middle frame 101. In this way, the coupling current on the camera module 200 may be grounded sequentially through the electrical connection structure 400, the first circuit board 310, and the middle frame 101.

In some implementations, the electronic device 1000 may further include an electronic component (not shown in the figure). The electronic component may be installed in the internal space of the electronic device 1000. For example, the electronic component may include a battery, a processor, a communication module, an audio module, a speaker, a microphone, a subscriber identity module (subscriber identity module, SIM) card, and the like.

In some implementations, the electronic device 1000 may further include a circuit board support (not shown in the figure). For example, the circuit board support may be fastened to the first circuit board 310. The circuit board support is configured to avoid interference between a structure (for example, the first electronic element 320 or another module) disposed on the first circuit board 310 and another component in the internal space of the electronic device 1000, to facilitate assembly of the electronic device 1000.

With reference to the accompanying drawings, the following describes several specific implementations in which the camera module 200 is electrically connected to the ground terminal of the electronic device 1000 by using the electrical connection structure 400.

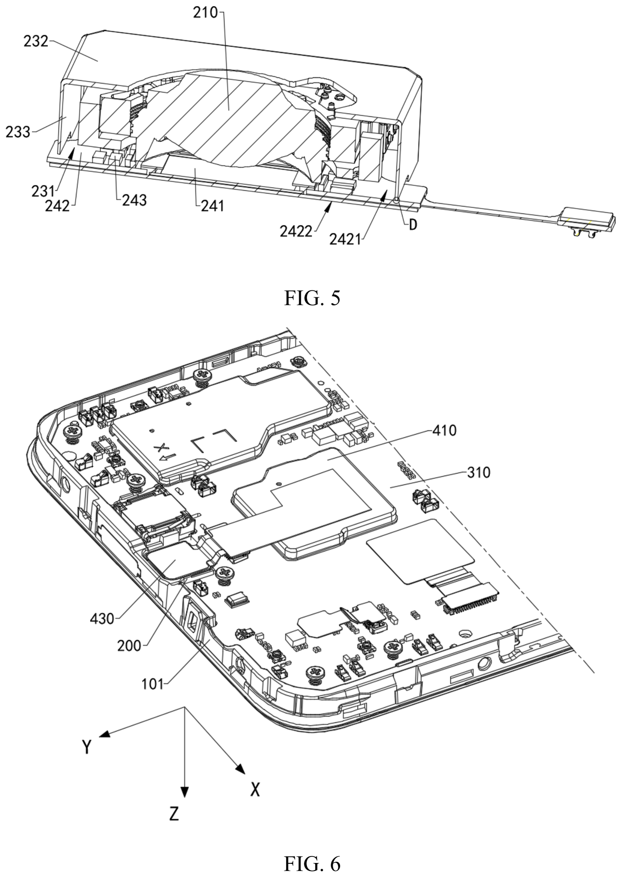

FIG. 4 is an exploded view of a camera module 200 shown in FIG. 2 in an implementation. FIG. 5 is a sectional view of the camera module 200 shown in FIG. 4 along a section line B-B in an implementation.

As shown in FIG. 4 and FIG. 5, the camera module 200 may include a lens 210, a motor 220, a casing 230, and a circuit module 240. The lens 210 may be a fixed-focus lens 210, an auto focus (Auto Focus, AF) lens, a zoom lens, or the like. An example in which the lens 210 is an AF lens is used in this application for description.

For example, the casing 230 may include an upper cover 232 and a side wall 233. The upper cover 232 is connected to one end of the side wall 233. In some implementations, the casing 230 may be made of a metal material, for example, stainless steel or aluminum alloy.

The lens 210 may be fastened to the motor 220. The motor 220 may be configured to drive the lens 210 to perform focusing. For example, the motor 220 may be provided with a light-transmitting channel 221. The lens 210 may be accommodated in the light-transmitting channel 221, and is fastened to the motor 220. The lens 210 and the motor 220 form a lens assembly 290 of the camera module 200.

For example, the motor 220 may be an AF-OIS motor 220. That is, the motor 220 may control the lens 210 to move along an optical axis direction of the lens 210 (the optical axis direction of the lens 210 is the Z-axis direction in this implementation), to implement automatic focusing (auto focus, AF). When the lens 210 is in a center position, the lens 210 may move toward a light-incident side, or may move toward the circuit module 240. In other words, the center position of the lens 210 may be understood as an initial position of the lens 210 before the lens 210 is focused.

The motor 220 may further control the lens 210 to move along a plane perpendicular to the optical axis (the plane perpendicular to the optical axis is an X-Y plane in this implementation). In this way, when the camera module 200 collects ambient light, if the electronic device 1000 experiences shaking on the X-Y plane due to external force, the motor 220 may control movement of the lens 210 on the X-Y plane, to cancel a shake stroke generated by the lens 210 on the X-Y plane, to avoid or reduce a position offset caused by shaking of the lens 210. In other words, the camera module 200 in this application may control movement of the lens 210 on the X-Y plane by using the motor 220, to implement optical image stabilization (optical image stabilization, OIS) of the camera module 200, and improve imaging quality of the camera module 200. In some implementations, the motor 220 may alternatively be an AF motor, an OIS motor, a voice coil motor, a shape memory alloy motor, a piezoelectric ceramic motor, a stepper motor, a micro motor (MEMS) motor, or the like.

The circuit module 240 may include a photosensitive chip 241, a second electronic element 243, and a second circuit board 242. The photosensitive chip 241 and the second electronic element 243 may be fastened to the second circuit board 242. The second circuit board 242 may be configured to carry the photosensitive chip 241 and the second electronic element 243. The photosensitive chip 241 may be configured to collect ambient light, and convert image information carried in the ambient light into an electrical signal. The second electronic element 243 may be an active component such as a chip, or may be a passive component such as a capacitor, an inductor, a resistor, or a filter. The second electronic element 243 may be configured to drive the motor 220 to operate.

For example, the second circuit board 242 may include a first surface 2421 and a second surface 2422, and the first surface 2421 and the second surface 2422 are disposed opposite to each other. The first surface 2421 is a surface that is of the second circuit board 242 and that faces the lens 210. The second electronic element 243, the photosensitive chip 241, the motor 220, and the side wall 233 of the casing 230 may be fastened to the first surface 2421 of the second circuit board 242. The upper cover 232 may be fastened to one end that is of the side wall 233 and that is away from the second circuit board 242. In this way, the upper cover 232, the side wall 233, and the second circuit board 242 may enclose accommodation space 231. The lens 210 and the motor 220 may be disposed in the accommodation space 231. In this way, the camera module 200 may form a whole, which facilitates installation.

In some implementations, the second surface 2422 of the second circuit board 242 may be used as a ground terminal of the second circuit board 242.

In some implementations, the second circuit board 242 may include a dielectric layer (not shown in the figure) and a metal layer (not shown in the figure). The metal layer is built in the dielectric layer. The dielectric layer may be used to protect and insulate the metal layer. The metal layer may be used to transmit an electrical signal. The photosensitive chip 241 and the second electronic element 243 may be electrically connected to the metal layer. The metal layer of the second circuit board 242 may be used as the ground terminal of the second circuit board 242.

In some implementations, the second circuit board 242 may be a printed circuit board (Printed Circuit Board, PCB).

As shown in FIG. 3 and FIG. 4, the electronic device 1000 may further include a flexible circuit board 250. One end of the flexible circuit board 250 may be electrically connected to the second circuit board 242, and another end of the flexible circuit board 250 may be electrically connected to the main board 300. A signal of the second circuit board 242 (for example, a signal of the photosensitive chip 241) may be transmitted to the main board 300 by using the flexible circuit board 250. For example, the flexible circuit board 250 may be electrically connected to the metal layer of the second circuit board 242.

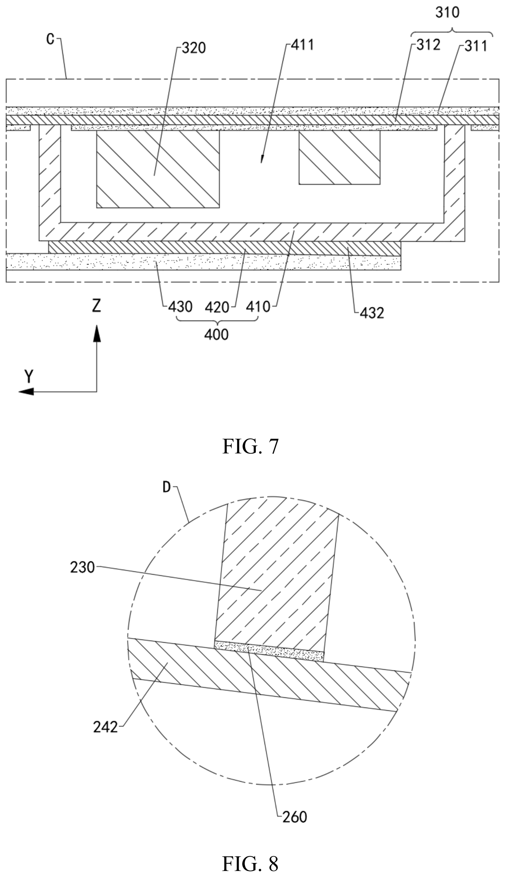

FIG. 6 is an assembly diagram of a partial structure shown in FIG. 3 from another perspective. FIG. 7 is an enlarged view of a structure shown in FIG. 3 at C in an implementation.

As shown in FIG. 3, FIG. 6, and FIG. 7, the electrical connection structure 400 may include a shielding cover 410, an insulation part 420, and a first conductive sheet 430. A first part 431 of the first conductive sheet 430 may be at least partially fastened to the camera module 200. The first part 431 of the first conductive sheet 430 may be electrically connected to the camera module 200. For example, the first part 431 of the first conductive sheet 430 may be at least partially fastened to a side that is of the second circuit board 242 and that is away from the lens 210. The first part 431 of the first conductive sheet 430 may be electrically connected to the second circuit board 242.

In some implementations, the first part 431 of the first conductive sheet 430 may be electrically connected to the second circuit board 242 by using a screw. In some implementations, the first part 431 of the first conductive sheet 430 may alternatively be electrically connected to the second circuit board 242 through conductive adhesive.

In some implementations, the first conductive sheet 430 may be a conductive fabric, for example, nickel-plated conductive fabric, gold-plated conductive fabric, carbon-plated conductive fabric, or aluminum foil fiber composite fabric. In some implementations, the first conductive sheet 430 may also alternatively be copper foil. It may be understood that the conductive fabric or the copper foil is thin in thickness and light in quality, and occupies small internal space of the electronic device 1000. The thickness of the electronic device 1000 in the Z-axis direction may be thin, which is conducive to lightness and thinning of the electronic device 1000. In addition, a shape of the conductive fabric or the copper foil with specific flexibility is easy to cut, and may be better attached to the camera module 200, so that there is a large contact area between the first conductive sheet 430 and the camera module 200, connection reliability is good, and impedance in a conductive process is low.

In some implementations, a thickness of the first conductive sheet 430 may range from 0.03 millimeter (millimeter, mm) to 0.05 mm. In this way, the thickness of the electronic device 1000 in the Z-axis direction may be thin, which is conducive to lightness and thinning of the electronic device 1000.

In some implementations, the casing 230 of the camera module 200 may be electrically connected to the second circuit board 242. When the first part 431 of the first conductive sheet 430 is electrically connected to the second circuit board 242, the casing 230 of the camera module 200 may be electrically connected to the first part 431 of the first conductive sheet 430 by using the second circuit board 242. In this way, a coupling current on the casing 230 may be conducted to the first conductive sheet 430 through the second circuit board 242.

FIG. 8 is an enlarged view of a structure shown in FIG. 5 at D in an implementation. The camera module 200 may further include an electrical connector 260. The electrical connector 260 may be configured to transmit the coupling current on the camera module 200. The electrical connector 260 may include one or more of a metal spring, a screw, a cable, a metal wire, a flexible circuit board, a conductive soldering layer, conductive adhesive, and the like. The casing 230 of the camera module 200 may be electrically connected to the second circuit board 242 by using the electrical connector 260. For example, when the electrical connector 260 is a conductive soldering layer, the casing 230 of the camera module 200 may be fastened to the second circuit board 242 through soldering, and the coupling current generated on the casing 230 may be conducted to the second circuit board 242 through the electrical connector 260. For another example, when the electrical connector 260 is a screw, the casing 230 may be fastened to the second circuit board 242 by using the screw (not shown in the figure), and the coupling current generated on the casing 230 may be conducted to the second circuit board 242 through the screw.

In some implementations, there may be one or more electrical connectors 260. When the camera module 200 includes a plurality of metal mechanical parts coupled to the antenna 600, to generate coupling currents, a plurality of electrical connectors 260 may be disposed. The plurality of electrical connectors 260 are connected, in a one-to-one correspondence, to the plurality of mechanical parts that are included in the camera module 200 and that generate the coupling currents, so that coupling currents generated by different structures of the camera module 200 are grounded as much as possible.

In some implementations, the first part 431 of the first conductive sheet 430 may be at least partially connected to the second surface 2422 of the second circuit board 242. In some implementations, the first part 431 of the first conductive sheet 430 may be further at least partially connected to the flexible circuit board 250. In this way, a connection area between the first conductive sheet 430 and the camera module 200 is large, and connection reliability is high.

In some implementations, the first part 431 of the first conductive sheet 430 may alternatively be electrically connected to the upper cover 232 of the camera module 200. It may be understood that a position at which the first conductive sheet 430 is connected to the camera module 200 may be adjusted according to a solution in which the camera module 200 is installed in the electronic device 1000. In addition, the plurality of mechanical parts that generate the coupling current in the camera module 200 may conduct, by using the electrical connector 260, the coupling current to a structure electrically connected to the first conductive sheet 430.

The shielding cover 410 may be electrically connected to the ground terminal of the electronic device 1000. For example, as shown in FIG. 6 and FIG. 7, the shielding cover 410 may be electrically connected to a ground terminal of the first circuit board 310. The shielding cover 410 may be configured to shield the to-be-shielded first electronic element 320, to prevent the first electronic element 320 from electromagnetic interference. For example, the shielding cover 410 may have accommodating space 411. The first electronic element 320 that requires electromagnetic shielding may be located in the accommodating space 411.

In some implementations, the rear cover 102 may be the ground terminal of the electronic device 1000. The shielding cover 410 may further be electrically connected to the rear cover 102.

In some implementations, the shielding cover 410 may be made of a metal conductive material. For example, the metal material may be aluminum alloy, stainless steel, or nickel silver.

For example, the insulation part 420 may be fastened to the shielding cover 410, and the insulation part 420 may be an insulating material. A second part 432 of the first conductive sheet 430 may be at least partially fastened to a side that is of the insulation part 420 and that is away from the shielding cover 410. The first conductive sheet 430, the insulation part 420, and the shielding cover 410 form a capacitor. The first conductive sheet 430 is insulated from the shielding cover 410. The shielding cover 410 is electrically connected to the first circuit board 310. In this way, the coupling current on the camera module 200 may be coupled to the shielding cover 410 through the first conductive sheet 430, and then is conducted to the ground terminal of the electronic device 1000 through the shielding cover 410 and the first circuit board 310.

It may be understood that, in comparison with a solution in which the first conductive sheet 430 is directly electrically connected to the shielding cover 410 through the conductive adhesive and the coupling current on the camera module 200 is directly grounded, in the solution in this embodiment of this application, the first conductive sheet 430, the insulation part 420, and the shielding cover 410 may form the capacitor, and the coupling current on the camera module 200 is coupled to the ground through the capacitor, so that impedance of the coupling current during electrical transmission can be reduced. In addition, the conductive adhesive is made of an insulating material mixed with metal particles, and the metal particles are used for conducting electricity. The metal particles are easily oxidized when exposed to air. Moreover, the metal particles generate heat during electrical transmission, and the heat further accelerates the oxidation of metal particles. After the metal particles are oxidized, a resistivity of the conductive adhesive is high, and a bonding capability of the conductive adhesive is reduced. Consequently, reliability of electrical connection between the first conductive sheet 430 and the shielding cover 410 is reduced. In comparison with the solution in which the first conductive sheet 430 is attached to the shielding cover 410 through the conductive adhesive, in the technical solutions in this embodiment of this application, the coupled current on the camera module 200 is coupled to the ground through the capacitor, the insulation part 420 is not prone to aging, and connection reliability between the first conductive sheet 430 and the shielding cover 410 is good. Reliability of electrical connection between the first conductive sheet 430 and the shielding cover 410 is good, and the coupling current on the camera module 200 may be well grounded. This reduces a risk of a fault caused by the coupling current on the camera module 200, and further avoids that the coupling current is radiated into air during transmission due to an unstable electrical connection caused by poor connection reliability between the first conductive sheet 430 and the shielding cover 410, generating a radiated spurious emission (radiated spurious emission, RSE) current and affecting wireless communication quality.

For example, the first circuit board 310 may include a dielectric layer 311 and a metal layer 312. The metal layer 312 is built in the dielectric layer 311. The dielectric layer 311 is made of an insulating material, and the metal layer 312 is made of conductive metal. The first electronic element 320 may be electrically connected to the metal layer 312, and the metal layer 312 may be used for electrical signal transmission between the first electronic elements 320 and grounding. The metal layer 312 may be used as the ground terminal of the first circuit board 310, and is electrically connected to the housing 100. For example, the middle frame 101 may be the ground terminal of the electronic device 1000. The first circuit board 310 may be fastened to the middle frame 101 by using a screw. The screw may be electrically connected to the middle frame 101 through the metal layer 312, and the first circuit board 310 may be electrically connected to the middle frame 101 by using the screw. In this way, the shielding cover 410 may be electrically connected to the ground terminal of the electronic device 1000 by using the first circuit board 310. For example, the shielding cover 410 may be electrically connected to the metal layer 312 of the first circuit board 310 through soldering.

In some implementations, the insulation part 420 may be an insulation adhesive. The second part 432 of the first conductive sheet 430 may be at least partially fastened to the shielding cover 410 by using the insulation part 420. In this way, the insulation part 420 may be used not only as an insulation medium of a capacitor, but also as a connection structure between the first conductive sheet 430 and the shielding cover 410, so that a connection structure does not need to be additionally disposed. This is conducive to miniaturization of the electronic device 1000.

In some implementations, the electrical connection structure 400 may further include an insulation tape. A part of the insulation tape is fastened to a side that is of the second part 432 of the first conductive sheet 430 and that is away from the shielding cover 410, and the other part of the insulation tape is fastened to the shielding cover 410, so that the second part 432 of the first conductive sheet 430 is at least partially fastened to the shielding cover 410.

It may be understood that, in comparison with a solution in which the first conductive sheet 430, the insulation part 420, and the first circuit board 310 form a capacitor, the first conductive sheet 430, the insulation part 420, and the shielding cover 410 form the capacitor. In this way, the coupling current on the camera module 200 is grounded, and there is no need to occupy space of the first circuit board 310 for disposing the first electronic element 320, which helps reduce a size of the electronic device 1000.

In addition, the shielding cover 410 occupies a large area, which facilitates arrangement of the insulation part 420 with a large size, thereby improving connection reliability between the first conductive sheet 430 and the shielding cover 410. The coupling current on the camera module 200 may be well grounded, thereby reducing a risk that the coupling current is radiated into air during transmission due to poor connection reliability between the first conductive sheet 430 and the shielding cover 410, generating a radiated spurious emission (radiated spurious emission, RSE) current.

In some implementations, a direct-facing area between the insulation part 420 and the shielding cover 410 is greater than 20 square millimeters. The direct-facing area between the insulation part 420 and the shielding cover 410 is a projection area of the insulation part 420 onto the shielding cover 410 along a first direction. The first direction is a direction in which the second part 432 of the first conductive sheet 430 faces the shielding cover 410. In this way, when the first conductive sheet 430 is fastened to the shielding cover 410 by using the insulation part 420, a connection area between the first conductive sheet 430 and the shielding cover 410 is large, connection reliability between the first conductive sheet 430 and the shielding cover 410 is good, and the coupling current on the camera module 200 may be well grounded, thereby avoiding that the coupling current is radiated into air during transmission due to the unstable electrical connection caused by the poor connection reliability between the first conductive sheet 430 and the shielding cover 410, generating the radiated spurious emission (radiated spurious emission, RSE) current and affecting the wireless communication quality.

In some implementations, a material of the insulation part 420 may be any one of polycarbonate (Polycarbonate, PC), polyvinyl chloride (Polyvinyl chloride, PVC), or polyethylene (Polyethylene, PE).

In some implementations, a resistivity of the insulation part 420 may range from 10⁹ ohm·meter to 10²² ohm·meter. In this way, a risk that the insulation part 420 is broken down when the coupling current is large can be reduced.

In some implementations, a thickness of the insulation part 420 may range from 0.03 mm to 0.05 mm. In this way, a risk that the insulation part 420 is broken down when the coupling current is large can be reduced.

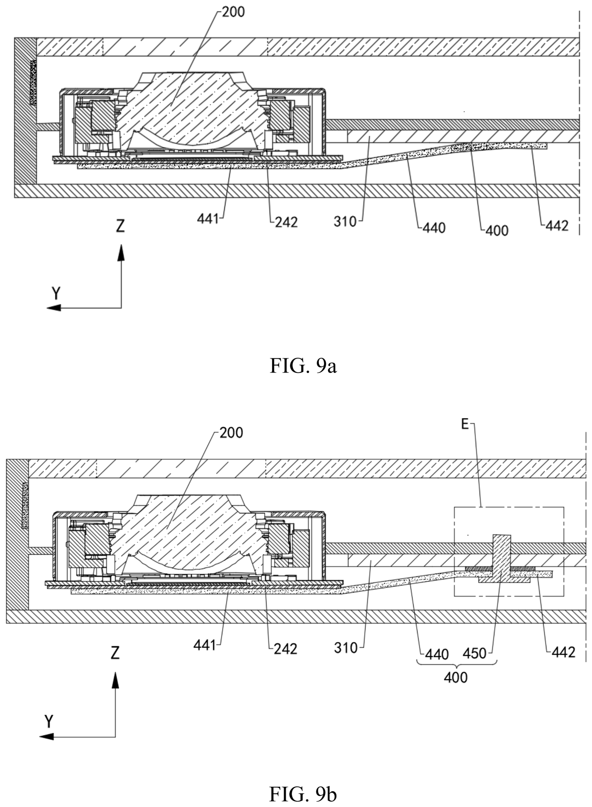

FIG. 9a is a partial sectional view of the electronic device 1000 shown in FIG. 1 along the section line A-A in another implementation.

As shown in FIG. 9a, the electrical connection structure 400 may include a metal spring 440. A first part 441 of the metal spring 440 may be at least partially fastened to the camera module 200. The first part 441 of the metal spring 440 may be electrically connected to the camera module 200. A second part 442 of the metal spring 440 may be electrically connected to the ground terminal of the electronic device 1000. For example, the ground terminal of the electronic device 1000 may be electrically connected to the ground terminal of the first circuit board 310, and the second part 442 of the metal spring 440 may be electrically connected to the ground terminal of the first circuit board 310. The second part 442 of the metal spring 440 may be at least partially soldered to the first circuit board 310.

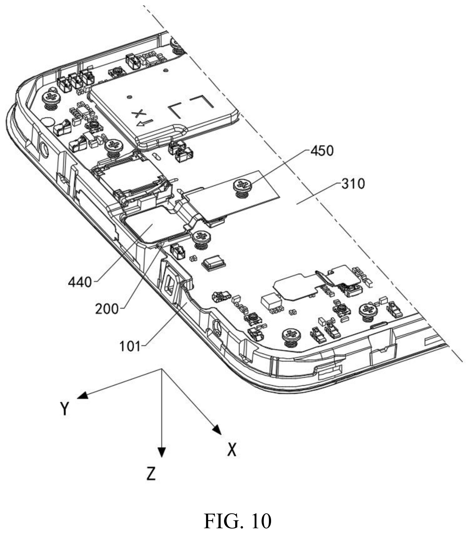

In some implementations, the electrical connection structure 400 may further include a screw 450. FIG. 9b is a partial sectional view of the electronic device 1000 shown in FIG. 1 along the section line A-A in another implementation. FIG. 10 is an assembly diagram of a partial structure shown in FIG. 9b from another perspective.

As shown in FIG. 9b and FIG. 10, the first part 441 of the metal spring 440 may be electrically connected to the camera module 200. The first part 441 of the metal spring 440 may be at least partially fastened to the camera module 200. The second part 442 of the metal spring 440 may be at least partially fastened to the first circuit board 310 by using the screw. The second part 442 of the metal spring 440 may be electrically connected to the first circuit board 310 by using the screw. The first circuit board 310 is electrically connected to the ground terminal of the electronic device 1000. The camera module 200 may be electrically connected to the ground terminal of the electronic device 1000 by using the metal spring 440, the screw 450, and the first circuit board 310.

For example, the second part 442 of the metal spring 440 may be electrically connected to the ground terminal of the first circuit board 310 by using the screw. The ground terminal of the first circuit board 310 may be electrically connected to the ground terminal of the electronic device 1000. In this way, the coupling current on the camera module 200 may be finally conducted to the ground terminal of the electronic device 1000 through the metal spring 440, the screw 450, and the ground terminal of the first circuit board 310.

It may be understood that, in comparison with a solution in which the metal spring 440 is fastened to the first circuit board 310 through the conductive adhesive, in this implementation, the metal spring 440 is fastened to the first circuit board 310 by using the screw 450, and connection strength between the metal spring 440 and the first circuit board 310 is high, thereby reducing a risk that the metal spring 440 falls off from the first circuit board 310 due to impact from external force. The second part 442 of the metal spring 440 may be electrically connected to the first circuit board 310 by using the screw. Reliability of electrical connection between the metal spring 440 and the first circuit board 310 is good. Therefore, the coupling current on the camera module 200 may be reliably grounded through the metal spring 440, the screw 450, and the first circuit board 310. This not only prevents the coupling current from interfering with operating of the camera module 200, but also prevents the coupling current from radiating an RSE current into air due to an unstable electrical connection, affecting a wireless communication signal.

For example, the first part 441 of the metal spring 440 may be at least partially fastened to a side that is of the second circuit board 242 of the camera module 200 and that is away from the casing 230. The first part 441 of the metal spring 440 may be electrically connected to the second circuit board 242.

For example, the first part 441 of the metal spring 440 may be electrically connected to the second circuit board 242 by using a screw.

In some implementations, the electrical connection structure 400 may further include a second conductive sheet (not shown in the figure). A part of the second conductive sheet may be electrically connected to the camera module 200, the other part of the second conductive sheet may be electrically connected to the metal spring 440, and the camera module 200 may be electrically connected to the metal spring 440 by using the second conductive sheet. For example, the second conductive sheet may be made of a conductive fabric, for example, nickel-plated conductive fabric, gold-plated conductive fabric, carbon-plated conductive fabric, or aluminum foil fiber composite fabric.

It may be understood that, the second conductive sheet is disposed, so that an electrical connection area between the metal spring 440 and the camera module 200 may be increased, and reliability of electrical connection between the metal spring 440 and the camera module 200 is improved.

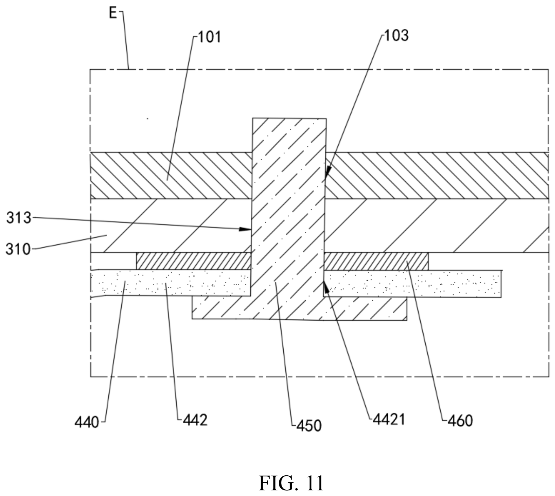

FIG. 11 is a structure diagram of a structure shown in FIG. 9b at E in an implementation.

As shown in FIG. 9b and FIG. 11, the second part 442 of the metal spring 440 may be provided with a first through hole 4421, the first circuit board 310 may be provided with a second through hole 313, and the ground terminal of the first circuit board 310 may be exposed in the second through hole 313. The screw 450 may be fastened in the first through hole 4421 and the second through hole 313. The metal spring 440 may abut against the ground terminal of the first circuit board 310. In this way, the coupling current on the camera module 200 may be transmitted to the ground terminal of the first circuit board 310 through the metal spring 440 and the screw 450.

In some implementations, the middle frame 101 may be used as the ground terminal of the electronic device 1000. The middle frame 101 may be further provided with a third through hole 103, and the screw 450 may be fastened in the first through hole 4421, the second through hole 313, and the third through hole 103. The coupling current on the camera module 200 may be electrically connected to the middle frame 101 through the metal spring 440, the screw 450, and the first circuit board 310.

In some implementations, the electrical connection structure 400 may further include foam 460. The foam 460 may be disposed between the metal spring 440 and the first circuit board 310. It may be understood that, connection strength between the screw 450 and the first circuit board 310 may be enhanced by disposing the foam 460.

In some implementations, the metal spring 440 may be a nickel-plated stainless steel sheet or a gold-plated stainless steel sheet. The metal spring 440 has good conductivity, and for grounding of the coupling current on the camera module 200, impedance of the metal spring 440 is small.

In some implementations, a thickness of the metal spring 440 ranges from 0.2 mm to 0.3 mm. In this way, the thickness of the electronic device 1000 in the Z-axis direction may be thin, which is conducive to lightness and thinning of the electronic device 1000.

It should be noted that in this embodiment of this application, a part that is the same as that in the foregoing embodiment is not described again.

This application describes several electronic devices 1000 through the accompanying drawings. The electronic device 1000 includes a casing 230, a camera module 200, a first circuit board 310, and an electrical connection structure 400. The electrical connection structure 400 is electrically connected to the camera module 200, and the first circuit board 310 is electrically connected to a ground terminal of the electronic device 1000.

The electrical connection structure 400 may include a metal spring 440 and a screw 450. A first part 441 of the metal spring 440 is electrically connected to the camera module 200. A second part 442 of the metal spring 440 is at least partially fastened to the first circuit board 310 by using the screw 450. The camera module 200 is electrically connected to the ground terminal of the electronic device 1000 by using the metal spring 440, the screw 450, and the first circuit board 310. It may be understood that, the metal spring 440 is fastened to the first circuit board 310 by using the screw 450, and connection strength between the metal spring 440 and the first circuit board 310 is high, thereby reducing a risk that the metal spring 440 falls off from the first circuit board 310 due to impact from external force, and providing good reliability of electrical connection between the metal spring 440 and the first circuit board 310. A coupling current on the camera module 200 may be well grounded, to reduce a risk of a fault caused by the coupling current on the camera module 200, and further avoid that the coupling current is radiated into air during transmission due to an unstable electrical connection, generating a radiated spurious emission (radiated spurious emission, RSE) current and affecting wireless communication quality.

Alternatively, the electrical connection structure 400 may include a shielding cover 410, an insulation part 420, and a first conductive sheet 430. The shielding cover 410 is electrically connected to the first circuit board 310, and the insulation part 420 is fastened to the shielding cover 410. A first part 431 of the first conductive sheet 430 is electrically connected to the camera module 200. A second part 432 of the first conductive sheet 430 is at least partially fastened to a side that is of the insulation part 420 and that is away from the shielding cover 410. The first conductive sheet 430, the insulation part 420, and the shielding cover 410 form a capacitor. It may be understood that, in comparison with a solution in which the first conductive sheet 430 is directly electrically connected to the shielding cover 410 through conductive adhesive and the coupling current on the camera module 200 is directly grounded, the first conductive sheet 430, the insulation part 420, and the shielding cover 410 form the capacitor, and the coupling current on the camera module 200 is coupled to the ground through the capacitor, so that impedance of the coupling current during electrical transmission can be reduced. In addition, the conductive adhesive is made of an insulating material mixed with metal particles, and the metal particles are used for conducting electricity. The metal particles are easily oxidized when exposed to air. Moreover, the metal particles generate heat during electrical transmission, and the heat further accelerates the oxidation of metal particles. After the metal particles are oxidized, a resistivity of the conductive adhesive is high, and a bonding capability of the conductive adhesive is reduced. Consequently, reliability of electrical connection between the first conductive sheet 430 and the shielding cover 410 is reduced. However, in the technical solutions of this application, the coupling current on the camera module 200 is coupled to the ground through the capacitor, the insulation part 420 is not prone to aging, and connection reliability between the first conductive sheet 430 and the shielding cover 410 is good. Reliability of electrical connection between the first conductive sheet 430 and the shielding cover 410 is good, and the coupling current on the camera module 200 may be well grounded. This reduces a risk of a fault caused by the coupling current on the camera module 200, and further avoids that the coupling current is radiated into air during transmission due to an unstable electrical connection caused by poor connection reliability between the first conductive sheet 430 and the shielding cover 410, generating a radiated spurious emission (radiated spurious emission, RSE) current and affecting wireless communication quality.

It may be understood that embodiments of this application and features in embodiments may be combined with each other if there is no conflict, and any combination of features in different embodiments also falls within the protection scope of this application. In other words, the plurality of embodiments described above may be further randomly combined based on an actual requirement.

It may be understood that all the foregoing accompanying drawings are example illustrations of this application, and do not represent actual sizes of products. In addition, a size proportion relationship between the components in the accompanying drawings is not intended to limit an actual product in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (1000), comprising a housing (100), a camera module (200), a first circuit board (310), and an electrical connection structure (400), wherein the electrical connection structure (400) is electrically connected to the camera module (200), and the first circuit board (310) is electrically connected to a ground terminal of the electronic device (1000); and
the electrical connection structure (400) comprises a metal spring (440) and a screw (450), a first part (441) of the metal spring (440) is electrically connected to the camera module (200), and a second part (442) of the metal spring (440) is at least partially fastened to the first circuit board (310) by using the screw (450), the camera module (200) is electrically connected to the ground terminal of the electronic device (1000) by using the metal spring (440), the screw (450), and the first circuit board (310); or
the electrical connection structure (400) comprises a shielding cover (410), an insulation part (420), and a first conductive sheet (430), wherein the shielding cover (410) is electrically connected to the first circuit board (310), the insulation part (420) is fastened to the shielding cover (410), a first part (431) of the first conductive sheet (430) is electrically connected to the camera module (200), and a second part (432) of the first conductive sheet (430) is at least partially fastened to a side that is of the insulation part (420) and that is away from the shielding cover (410), and the first conductive sheet (430), the insulation part (420), and the shielding cover (410) form a capacitor.

2. The electronic device (1000) according to claim 1, wherein the insulation part (420) is an insulation adhesive.

3. The electronic device (1000) according to claim 2, wherein a direct-facing area between the insulation part (420) and the shielding cover (410) is greater than 20 square millimeters.

4. The electronic device (1000) according to any one of claims 1 to 3, wherein a thickness of the insulation part (420) ranges from 0.03 millimeter to 0.05 millimeter.

5. The electronic device (1000) according to any one of claims 1 to 4, wherein a thickness of the first conductive sheet (430) ranges from 0.03 millimeter to 0.05 millimeter.

6. The electronic device (1000) according to any one of claims 1 to 5, wherein the first conductive sheet (430) is a nickel-plated conductive fabric, a gold-plated conductive fabric, a carbon-plated conductive fabric, or an aluminum foil fiber composite fabric; or
the first conductive sheet (430) is copper foil.

7. The electronic device (1000) according to claim 1, wherein the metal spring (440) is a nickel-plated stainless steel sheet or a gold-plated stainless steel sheet.

8. The electronic device (1000) according to claim 1 or 7, wherein a thickness of the metal spring (440) ranges from 0.2 millimeter to 0.3 millimeter.

9. The electronic device (1000) according to claim 7 or 8, wherein the second part (442) of the metal spring (440) is provided with a first through hole (4421), the first circuit board (310) is provided with a second through hole (313), the screw (450) is fastened in the first through hole (4421) and the second through hole (313), and the metal spring (440) abuts against the ground terminal of the first circuit board (310).

10. The electronic device (1000) according to any one of claims 7 to 9, wherein the electrical connection structure (400) further comprises a second conductive sheet, the second conductive sheet is electrically connected to the camera module (200), the second conductive sheet is electrically connected to the metal spring (440), and the camera module (200) is electrically connected to the metal spring (440) by using the second conductive sheet.

11. The electronic device (1000) according to claim 1, wherein the camera module (200) comprises a lens assembly (290), a casing (230), and a second circuit board (242), the casing (230) is fastened to the second circuit board (242), the casing (230) and the second circuit board (242) enclose accommodation space (231), and the lens assembly (290) is disposed in the accommodation space (231); and
the first part (431) of the first conductive sheet (430) is electrically connected to the second circuit board (242); or
the first part (441) of the metal spring (440) is electrically connected to the second circuit board (242).
